(19) Europäisches Patentamt
European Patent Office
Office européen des brevets

(11) **EP 4 541 497 A1**

(12) **EUROPEAN PATENT APPLICATION**
published in accordance with Art. 153(4) EPC

(43) Date of publication:
**23.04.2025 Bulletin 2025/17**

(21) Application number: **23824018.8**

(22) Date of filing: **16.06.2023**

(51) International Patent Classification (IPC):
**B23K 9/095** (2006.01)     **B23K 9/00** (2006.01)
**B23K 9/02** (2006.01)     **B23K 9/12** (2006.01)

(52) Cooperative Patent Classification (CPC):
**B23K 9/00; B23K 9/02; B23K 9/095; B23K 9/12**

(86) International application number:
**PCT/JP2023/022494**

(87) International publication number:
**WO 2023/243728 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022 JP 2022098078**

(71) Applicant: NIPPON STEEL CORPORATION
Chiyoda-ku
Tokyo 100-8071 (JP)

(72) Inventors:
• **MATSUDA, Kazuki**
  **Tokyo 100-8071 (JP)**
• **KODAMA, Shinji**
  **Tokyo 100-8071 (JP)**
• **ISHIDA, Yoshinari**
  **Tokyo 100-8071 (JP)**
• **MATSUBA, Masahiro**
  **Tokyo 100-8071 (JP)**

(74) Representative: **Vossius & Partner
Patentanwälte Rechtsanwälte mbB
Siebertstrasse 3
81675 München (DE)**

(54) **METHOD FOR MANUFACTURING ARC WELDED JOINT, ARC WELDED JOINT, AND AUTOMOTIVE COMPONENT**

(57)     In an embodiment of the present invention, a manufacturing method for an arc-welded joint includes: stacking a first steel sheet and a second steel sheet in a sheet thickness direction so that an end portion of the first steel sheet is disposed on a surface of the second steel sheet; and performing arc welding to the end portion of the first steel sheet and the surface of the second steel sheet, which are overlapped with each other, to form a weld bead, wherein the surface of the second steel sheet has a zinc-type coating, the arc welding is weaving arc welding in which a torch is periodically swung in a direction transverse to a welding direction, a sheet thickness $t_L$ (mm) of the second steel sheet and an undulation wavelength $y$ (mm) of the torch in the weaving arc welding are values satisfying $y/t_L \leq 2.8$, a width $w$ (mm) of the weld bead and the sheet thickness $t_L$ of the second steel sheet are values satisfying $3.3 \leq w/t_L \leq 7.0$, and in the weaving arc welding, a droplet transfer frequency $D$ (turns/second) from the torch to a molten pool and a swing frequency $f$ (Hz) are values satisfying $D/f \geq 25$.

FIG. 1

EP 4 541 497 A1

## Description

Technical Field

The present disclosure relates to a manufacturing method for an arc-welded joint, an arc-welded joint, and a vehicle component.

Priority is claimed on Japanese Patent Application No. 2022-098078, filed June 17, 2022, the content of which is incorporated herein by reference.

Background Art

As a material of a vehicle component such as a suspension part, a hot-rolled thin steel sheet is mainly used. The hot-rolled thin steel sheets are often joined by arc welding.

In recent years, as steel sheets constituting a vehicle component have become higher in strength and smaller in thickness, weld joints are required to be improved in corrosion resistance level. Therefore, in vehicle components, there is an increasing need to use a zinc-coated steel sheet with exceptional corrosion resistance as a material.

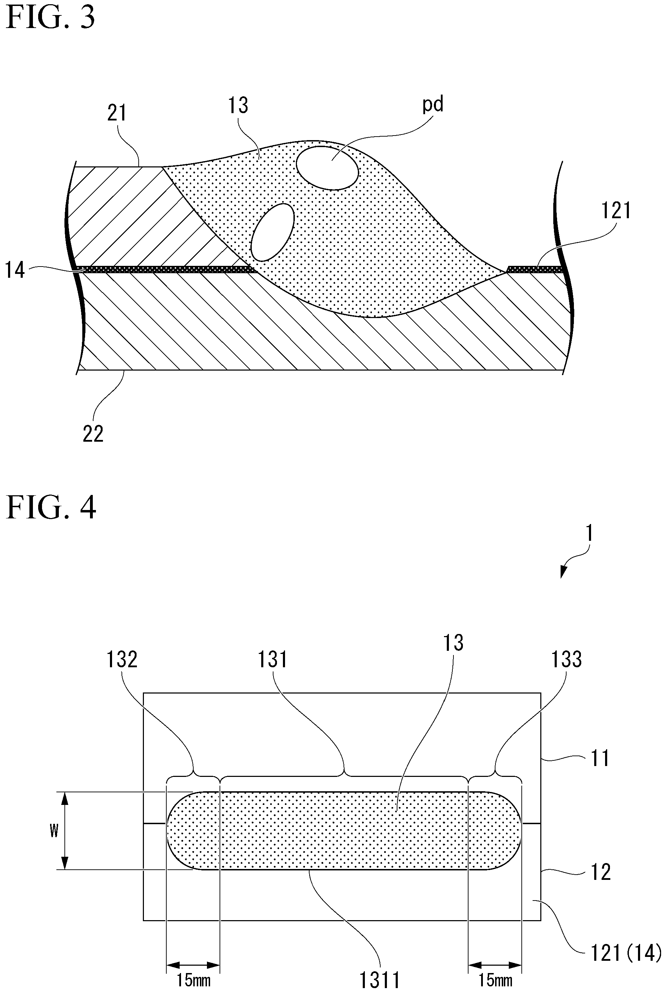

It is known that when a zinc-coated steel sheet is arc-welded, voids called porosity defects are easily generated in the weld bead. As shown in FIG. 3, during normal arc welding, a zinc-type coating 14 having a lower melting point and a lower boiling point than that of iron evaporates and becomes zinc vapor 14v. When a molten pool 13P is solidified while zinc vapor 14v remains in the molten pool 13P, porosity defects pd are generated in a weld bead 13. The molten pool 13P is a pool of molten metal formed by heat from an arc or the like during welding.

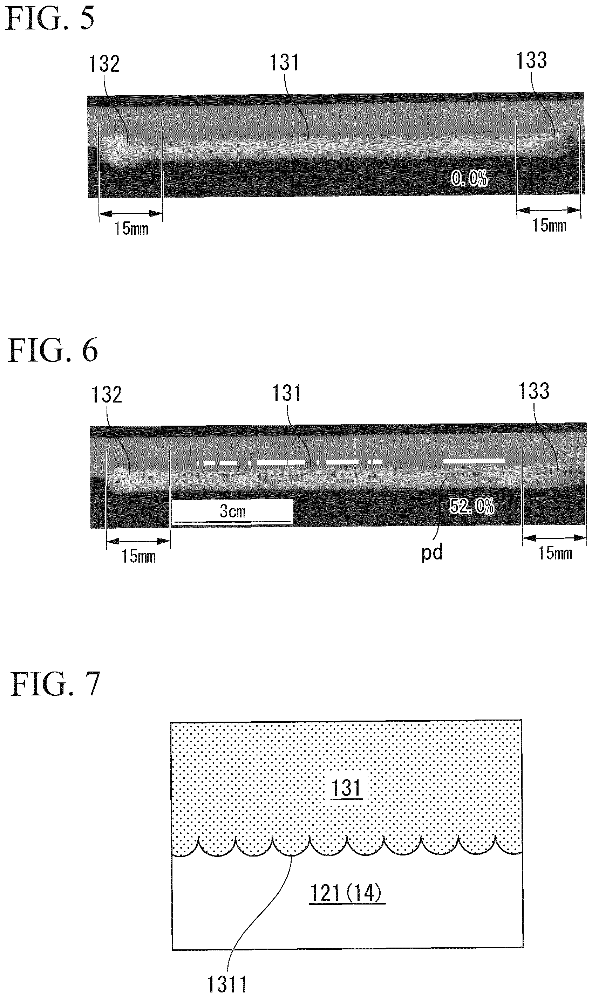

FIG. 6 illustrates an example of an X-ray image of a conventional arc-welded joint in which porosity defects have been generated. In the arc-welded joint illustrated in the image of FIG. 6, a large amount of porosity defects pd indicated in dark color is contained inside the weld bead 13 indicated in bright color.

When a large amount of porosity defects is generated, the joint area of the steel sheets is reduced, thereby reducing the joint strength. In addition, porosity defects cause a pit that deteriorates electrodeposition coating properties. The pit is an opening pore that reaches the surface of the weld bead. The pit may cause irregularities on the surface of the weld bead, leading to electrodeposition coating defects. Even when the number of porosity defects is small, electrodeposition coating properties are deteriorated.

For the above reasons, a technique for suppressing occurrence of porosity defects in a weld joint obtained by arc-welding a zinc-coated steel sheet is desired.

Patent Document 1 discloses a Tungsten Inert Gas (TIG) welding method of a fillet joint using a zinc-coated steel sheet or a primer-coated steel sheet, in which a TIG arc swinging at a frequency of 10 Hz or more and an amplitude of 3 mm or more is used, welding conditions including an arc current value and a welding speed at which a joint corner portion is not melted while the base metal surface constituting a lap joint of two base metals is melted are adopted, a gap is formed at the joint corner portion between a wire and the base metal while a weld metal is formed by feeding the addition wire from the welding advancing direction toward the molten pool along the base metal corner portion, and welding is performed while zinc vapor generated on the base metal surface in the vicinity of the joint corner portion near the bottom portion of the molten pool is discharged from the gap to the outside. According to this welding method, welding can be performed without forming pores or pits when welding is performed while constantly maintaining a path to easily discharge zinc vapor or primer component vapor to the outside from a heat-affected region adjacent to the molten pool of the base metal overlapping part where zinc-coated steel sheets or primer-coated steel sheets are in close contact.

Citation List

Patent Document

Patent Document 1
Japanese Unexamined Patent Application, First Publication No. 2003-53544

Summary of Invention

Technical Problem

However, in the technique disclosed in Patent Document 1, it is necessary not to melt the joint corner portion. Therefore, according to the technique of Patent Document 1, it is difficult to secure the penetration depth of the weld bead. In the technique disclosed in Patent Document 1, it is essential that the welding means is Tungsten Inert Gas (TIG) welding. Tungsten Inert Gas (TIG) welding is an arc welding in which non-consumable tungsten is used as an electrode to generate an arc and a filler metal such as a welding wire is introduced into the arc. The technique disclosed in Patent Document 1 cannot be applied to a consumable electrode type arc welding such as submerged arc welding. In order to suppress the occurrence of porosity defects in various components, a technique applicable to various arc weldings, not limited to Tungsten Inert Gas (TIG) welding, is required.

An object of the present disclosure is to provide a manufacturing method for an arc-welded joint that is capable of suppressing porosity defects when zinc-coated steel sheets are welded, and an arc-welded joint and a vehicle component that are constituted by zinc-coated steel sheets and suppressed in porosity defects.

Solution to Problem

The gist of the present disclosure is as follows.

(1) In an embodiment of the present invention, a manufacturing method for an arc-welded joint includes: stacking a first steel sheet and a second steel sheet in a sheet thickness direction so that an end portion of the first steel sheet is disposed on a surface of the second steel sheet; and performing arc welding to the end portion of the first steel sheet and the surface of the second steel sheet, which are overlapped with each other, to form a weld bead, wherein the surface of the second steel sheet has a zinc-type coating, the arc welding is weaving arc welding in which a torch is periodically swung in a direction transverse to a welding direction, a sheet thickness $t_L$ (mm) of the second steel sheet and an undulation wavelength y (mm) of the torch in the weaving arc welding are values satisfying $y/t_L \leq 2.8$, a width w (mm) of the weld bead and the sheet thickness $t_L$ of the second steel sheet are values satisfying $3.3 \leq w/t_L \leq 7.0$, and in the weaving arc welding, a droplet transfer frequency D (turns/second) from the torch to a molten pool and a swing frequency f (Hz) are values satisfying $D/f \geq 25$.

(2) Preferably, in the manufacturing method for an arc-welded joint according to (1), the weld bead has a Si content of 0.5 mass% or less.

(3) Preferably, in the manufacturing method for an arc-welded joint according to (1) or (2), the undulation wavelength y of the torch and the sheet thickness $t_L$ of the second steel sheet are values satisfying $0.7 \leq y/t_L$.

(4) Preferably, in the manufacturing method for an arc-welded joint according to any one of (1) to (3), the weld bead does not penetrate the second steel sheet in the sheet thickness direction.

(5) Preferably, in the manufacturing method for an arc-welded joint according to any one of (1) to (4), in a cross section along the sheet thickness direction, an outer edge of the weld bead intersects a mating surface of the first steel sheet and the second steel sheet.

(6) Preferably, in the manufacturing method for an arc-welded joint according to any one of (1) to (5), the swing frequency f is less than 10 Hz.

(7) Preferably, in the manufacturing method for an arc-welded joint according to any one of (1) to (6), the arc welding is Metal Active Gas welding.

(8) In another embodiment of the present invention, an arc-welded joint includes: a first steel sheet portion; a second steel sheet portion stacked with the first steel sheet portion in a sheet thickness direction; a weld bead to join an end portion of the first steel sheet portion disposed on a surface of the second steel sheet portion with the surface of the second steel sheet portion; wherein the surface of the second steel sheet portion has a zinc-type coating in a region where the weld bead is not provided, a width w of the weld bead and a sheet thickness $t_L$ of the second steel sheet portion satisfy $3.3 \leq w/t_L \leq 7.0$, and a porosity defect rate in a stationary portion of the weld bead is less than 10%.

(9) Preferably, in the arc-welded joint according to (8), the weld bead has a Si content of 0.5 mass% or less.

(10) Preferably, in the arc-welded joint according to (8) or (9), in the stationary portion of the weld bead, a weld toe on a side of the second steel sheet portion has a wavy shape, and a wavelength Y of the weld toe and a sheet thickness $t_L$ of the second steel sheet portion satisfy $0.7 \leq Y/t_L \leq 2.8$.

(11) Preferably, in the arc-welded joint according to any one of (8) to (10), the weld bead does not penetrate the second steel sheet portion in the sheet thickness direction.

(12) Preferably, in the arc-welded joint according to any one of (8) to (11), in a cross section along the sheet thickness direction, an outer edge of the weld bead intersects a mating surface of the first steel sheet portion and the second steel sheet portion.

(13) In another embodiment of the present invention, a vehicle component includes the arc-welded joint according to any one of (8) to (12).

Advantageous Effects of Invention

According to the present disclosure, a manufacturing method for an arc-welded joint that is capable of suppressing porosity defects when zinc-coated steel sheets are welded and an arc-welded joint that is constituted by zinc-coated steel sheets and suppressed in porosity defects can be provided.

Brief Description of Drawings

FIG. 1 is a conceptual diagram of a manufacturing method for an arc-welded joint according to the embodiment in plan view.
FIG. 2 is a conceptual diagram of a manufacturing method for an arc-welded joint according to the embodiment in a cross-sectional view perpendicular to a welding direction.
FIG. 3 is a cross-sectional view of an arc-welded joint in which porosity defects have been generated in a weld bead.
FIG. 4 is a plan view of an example of an arc-welded joint according to the embodiment.
FIG. 5 is an X-ray image of an example of an arc-welded joint according to the embodiment.
FIG. 6 is an X-ray image of an example of a conventional arc-welded joint including porosity defects.
FIG. 7 is a plan view of an example of a weld bead whose stationary portion has a weld toe having a wavy shape.
FIG. 8A is a cross-sectional view of an example of an arc-welded joint having a gap near a root R.
FIG. 8B is a cross-sectional view of an example of an arc-welded joint in which the outer edge of a weld bead intersects the mating surface of a first steel sheet portion and a second steel sheet portion.

Description of Embodiments

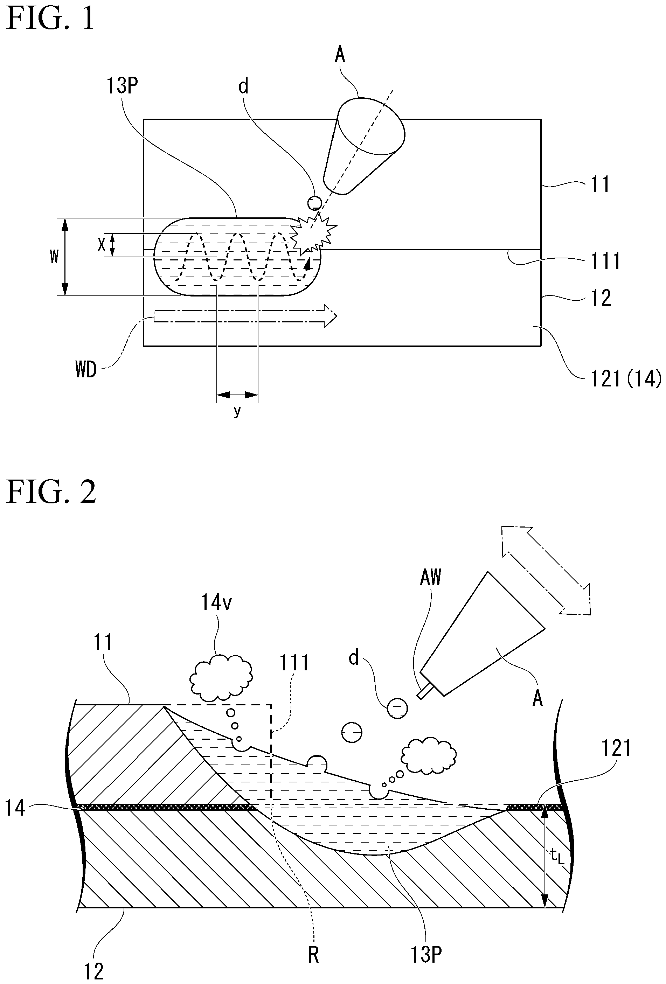

In an embodiment of the present disclosure, as illustrated in FIG. 1 and FIG. 2, a manufacturing method for an arc-welded joint 1 includes: stacking a first steel sheet 11 and a second steel sheet 12 in a sheet thickness direction so that an end portion of the first steel sheet 11 is disposed on a surface of the second steel sheet 12; and performing arc welding to the end portion 111 of the first steel sheet 11 and the surface 121 of the second steel sheet 12, which are overlapped with each other, to form a weld bead 13, wherein the surface 121 of the second steel sheet 12 has a zinc-type coating 14, the arc welding is weaving arc welding in which a torch A is periodically swung in a direction transverse to a welding direction WD, a sheet thickness tL (mm) of the second steel sheet 12 and an undulation wavelength y (mm) of the torch A in the weaving arc welding are values satisfying $y/tL \leq 2.8$, a width w (mm) of the weld bead 13 and the sheet thickness tL of the second steel sheet 12 are values satisfying $3.3 \leq w/tL \leq 7.0$, and in the weaving arc welding, a droplet transfer frequency D (turns/second) from the torch A to a molten pool 13P and a swing frequency f (Hz) are values satisfying $D/f \geq 25$. Alternatively, in an embodiment of the present disclosure, a manufacturing method for an arc-welded joint includes a step of performing arc welding to the end portion of the first steel sheet and the surface of the second steel sheet, which are overlapped with each other, to form a weld bead, wherein the surface to be arc-welded of the second steel sheet has a zinc-type coating, the arc welding is weaving arc welding, a sheet thickness tL (mm) of the second steel sheet and an undulation wavelength y (mm) of the torch A in the weaving arc welding are values satisfying $y/tL \leq 2.8$, a width w (mm) of the weld bead and the sheet thickness tL of the second steel sheet are values satisfying $3.3 \leq w/tL \leq 7.0$, and in the weaving arc welding, a droplet transfer frequency D (turns/second) from the torch to a molten pool and a swing frequency f (Hz) are values satisfying $D/f \geq 25$. This manufacturing method will be described in detail below. The definition of the terms in the manufacturing method for an arc-welded joint described below also applies to the terms in the arc-welded joint.
The present inventors have extensively conducted studies on a method for reducing porosity defects pd in a weld bead 13 obtained by arc-welding zinc-coated steel sheets. The present inventors have found that the amount of porosity defects pd is dramatically reduced by:

(1) performing weaving arc welding in which a torch A is periodically swung in a direction transverse to a welding direction WD under predetermined conditions, and
(2) controlling a droplet transfer frequency D from the torch A to a molten pool 13P in arc welding within a predetermined range.

The weaving method is a welding technique of forming a weld bead 13 while a torch A for arc welding is periodically swung in a direction transverse to a welding direction WD. The welding direction WD is an extending direction of the weld bead 13 obtained by welding. Weaving arc welding is an arc welding performed according to the weaving method. Typically, for example, the trajectory of weaving arc welding is a sine wave. In this case, the moving speed of the torch along the welding direction WD is constant, and the torch shows simple harmonic motion along the direction perpendicular to WD. On the other hand, when the speed of the torch along the welding direction WD and the speed of the torch along the direction perpendicular to WD are periodically changed, various trajectories can be formed.
In general, a weaving bead obtained by a weaving method in which the torch A is periodically swung in a direction transverse to the welding direction WD tends to have a width larger than that of a normal weld bead. For example, the weaving bead often has a larger ratio of the penetration width to the penetration depth than a normal weld bead. Therefore, when a zinc-coated steel sheet is subjected to weaving arc welding, a larger amount of the zinc-type coating 14 is incorporated in the molten pool 13P than in normal arc welding. For this reason, it has been conventionally considered that weaving arc welding is not preferable from the viewpoint of suppressing porosity defects pd caused by the zinc-type coating 14. In the welding method disclosed in Patent Document 1, a Tungsten Inert Gas (TIG) arc is swung, and at the same time, a gap is provided in a corner portion to discharge zinc vapor from the molten metal.

However, the present inventors have found that the amount of porosity defects pd is dramatically reduced by (1) performing weaving arc welding under predetermined conditions and (2) increasing the droplet transfer frequency D from the torch A to the molten pool 13P. The droplet transfer frequency D is the frequency at which a droplet d transfers from the tip of a welding wire AW toward the molten pool 13P across the arc generation portion. The droplet d is a particle of molten metal formed by melting the welding wire AW by heat from an arc or the like. It is presumed that the droplet d frequently falls on the molten metal, and whereby the molten metal in the molten pool 13P is stirred, and discharge of zinc vapor 14v from the molten pool 13P is further promoted.

In addition, the present inventors have found that, although weaving is necessary to stir the molten pool 13P, an excessively high swing frequency is not preferable in weaving arc welding. Therefore, it is necessary that (3) the droplet transfer frequency D and the swing frequency f in weaving arc welding satisfies $D/f \geq 25$. The swing frequency f of the torch A is the reciprocal of the length (second) of one cycle when the torch A is periodically swung.

The reason for specifying D/f is as follows. In order to promote discharge of zinc vapor from the molten pool, it is necessary to actively stir the molten pool. At this time, stirring of the molten metal using the droplet d and weaving arc welding need to be combined. It is considered that the increase in the droplet transfer frequency D helps to promote the above zinc discharge. However, according to the study of the present inventors, when weaving is not performed, the porosity defect rate is not sufficiently decreased even when the droplet transfer frequency D is increased.

On the other hand, when welding is performed satisfying $D/f \geq 25$, the porosity defect rate decreases. This is presumably because the droplet d transfers to various places in the molten pool 13P by weaving welding, and the stirring of the molten pool 13P becomes more active. That is, as illustrated in FIG. 1, it is considered to be necessary that the droplet d is uniformly transferred to the entire molten pool 13P by weaving welding by which the trajectory of the torch A is not straight but draws a nonstraight trajectory, for example, a sine wave shape. In other words, the droplet d transfers not only in the welding direction but also in a direction transverse to the welding direction. As a result, stirring proceeds not only in the welding direction of molten pool 13P but also in the width direction, and the porosity defect rate can be efficiently reduced.

However, when the swing frequency f is large with respect to the droplet transfer frequency D and $D/f \geq 25$ is not satisfied, the porosity defect rate is not sufficiently reduced. Presumably, this indicates that the molten pool 13P is not sufficiently stirred unless the droplet d continuously transfers by a certain amount or more so as to follow the weaving trajectory of the torch A in weaving welding, that is, unless the droplet d transfers without excessive interval. The above formula means that the number of the droplets d transferring per swing cycle of the torch A is 25 or more. Furthermore, when the swing frequency f is too large, arc welding may become unstable. For the above reasons, it is also necessary to satisfy $D/f \geq 25$ in order to reduce the porosity defect rate of the arc-welded joint 1.

The manufacturing method for an arc-welded joint 1 of the embodiment, which has been obtained based on the above technical idea, will be described in detail below.

In the manufacturing method for an arc-welded joint 1 of the embodiment, first, a first steel sheet 11 and a second steel sheet 12 are stacked in a sheet thickness direction so that the end portion 111 of the first steel sheet 11 is disposed on the surface 121 of the second steel sheet 12. Next, the end portion 111 of the first steel sheet 11 and the surface 121 of the second steel sheet 12 are subjected to arc welding to form a weld bead 13. During arc welding, the first steel sheet 11 and the second steel sheet 12 are stacked. The weld bead 13 is formed to join the end portion 111 of the first steel sheet 11 and the surface 121 of the second steel sheet 12. Therefore, the arc-welded joint 1 obtained by the manufacturing method according to the embodiment is a so-called lap fillet weld joint.

The "steel sheet" is a concept including not only a sheet-shaped member but also a sheet-shaped portion of a member having a three-dimensional shape. For example, the flange portion of a hat-shaped member is also regarded as a steel sheet according to the embodiment.

Of the first steel sheet 11 and the second steel sheet 12, at least the surface 121 of the second steel sheet 12 on which the first steel sheet 11 is stacked (that is, the surface to be arc-welded 121) has a zinc-type coating 14. This improves corrosion resistance of the arc-welded joint 1. More preferably, both surfaces of the second steel sheet 12 have a zinc-type coating 14. Even more preferably, one surface or both surfaces of the first steel sheet 11 also have a zinc-type coating 14. Note that the zinc-type coating 14 is a coating having a composition mainly including zinc and optionally further including elements such as Si, Al, Mg, and Fe. The phrase "the zinc-type coating has a composition mainly including zinc" means that the element most contained in the zinc-type coating is zinc. Alternatively, "the zinc-type coating has a composition mainly including zinc" means that the Zn content in the zinc-type coating is 50 mass% or more.

The coating process includes electrocoating, hot-dip coating, and the like, and the steel sheet and the coating may be alloyed by heat treatment after coating. The examples of the zinc-type coating 14 described above all have a sacrificial anticorrosion effect. The components of the zinc-type coating 14 are measured by the following method. First, an acid solution in which the coating layer is peeled off and dissolved is obtained using an acid containing an inhibitor that suppresses corrosion of a steel material. Next, the obtained acid solution is subjected to ICP analysis. Thus, the components of the zinc-type coating 14 can be specified. The acid species is not particularly limited as long as it is an acid that can dissolve the zinc-type coating 14. The component measured by the above-described means is the average component of the entire coating layer.

Since the zinc-type coating 14 is disposed on the surface to be arc-welded 121 of the second steel sheet 12, a large amount of zinc is mixed into the molten pool 13P formed by arc welding. Since zinc has a lower melting point and a lower boiling point than those of iron, zinc in the molten pool 13P evaporates during arc welding to become zinc vapor 14v. When a molten pool 13P is solidified while zinc vapor 14v remains in the molten pool 13P, porosity defects pd are generated in a weld bead 13. The molten pool 13P is a pool of molten metal formed by heat from an arc or the like during welding. In order to solve this problem, in the arc-welded joint 1 according to the embodiment, the weaving conditions and the droplet transfer frequency D are defined as described below.

(1. Weaving conditions)

The arc welding is weaving arc welding. In the weaving arc welding, the torch A is periodically swung in a direction transverse to a welding direction WD. The weaving arc welding is performed such that the following formulas 1 and 2 are satisfied.

[Mathematical Formula 1]

$$\frac{y}{t_L} = \frac{50v}{3ft_L} \le 2.8 \qquad (\text{formula } 1)$$

formula 1

$$3.3 \le w/t_L \le 7.0 \qquad (\text{formula } 2)$$

Here, the definition of the reference numbers included in the above formula is as follows.

y: Wavelength (mm) of undulation of the torch A (that is, a trajectory formed by the periodical swing of the torch A) in the weaving arc welding

In other words, y is a distance that the periodically swinging torch A travels along the welding direction WD per cycle.

tL: Sheet thickness (mm) of the second steel sheet 12
v: Moving speed (m/min) of the torch A along the welding direction WD
f: Swing frequency (Hz) of the torch A
w: Width (mm) of the weld bead 13

The coefficient "50/3" (that is, "1000/60") included in the formula 1 is a value for matching the unit "m/min" of the moving speed v of the torch, the unit "Hz" (that is, "sec$^{-1}$") of the swing frequency f, and the unit "mm" of the undulation wavelength y.

The values corresponding to these reference numbers will be described in more detail below.

As described above, in the weaving arc welding, the weld bead 13 is formed while the torch A for arc welding is periodically swung in a direction transverse to the welding direction WD. In the weaving arc welding in which the torch A is periodically swung, the undulation wavelength y of the torch A refers to a moving distance of the torch A during one cycle of the weaving arc welding along the welding direction WD. FIG. 1 illustrates an example of the undulation wavelength y. The undulation wavelength y is a moving distance measured along the welding direction WD. The moving distance of the torch along the trajectory of the torch (dashed line shown in FIG. 1) and the undulation wavelength y of the torch are different concepts.

The moving speed v of the torch A along the welding direction WD is a value obtained by dividing the moving distance of the torch A along the welding direction WD by the time required for the moving. The moving speed in the lateral direction with respect to the welding direction WD is not included in v.

The swing frequency f of the torch A is the reciprocal of the length (second) of one cycle when the torch A is periodically swung.

The width w of the weld bead 13 is the length (width) of the weld bead 13 measured along the direction perpendicular to the welding direction WD, that is, the extending direction of the weld bead 13.

The sheet thickness tL of the second steel sheet 12 is the sheet thickness tL of the second steel sheet at the weld and the vicinity thereof. When the sheet thickness tL of the second steel sheet is non-uniform, the sheet thickness of the second steel sheet at the weld and the vicinity thereof is regarded as tL. As for the sheet thickness, an average value obtained by measuring at least two positions in the range of 10 mm from the weld toe of the weld bead in the direction perpendicular to the extending direction of the weld bead is regarded as the sheet thickness tL of the second steel sheet 12. The sheet thickness may be measured with a micrometer, a vernier caliper, or the like, or may be measured by microscope observation of a cross-section obtained by cutting.

As shown in the formula 1, the undulation wavelength y of the torch A is a function of the moving speed v of the torch A and the swing frequency f of the torch A. The present inventors determine the upper limit value of the undulation wavelength y of the torch A in accordance with the sheet thickness tL of the second steel sheet 12. The larger the sheet thickness of the second steel sheet 12 (corresponding to so-called the "lower sheet" of a lap fillet weld joint), the larger the heat input amount required in arc welding. In general arc welding, the heat input amount is set such that a penetration depth of about 1/2 of the sheet thickness of the lower sheet can be secured. As the sheet thickness tL of the lower sheet increases, the required heat input amount increases, and the generation amount of zinc vapor 14v also increases. Therefore, in determining the undulation wavelength y to suppress zinc vapor 14v, the thickness tL of the lower sheet is also considered.

When y/tL exceeds 2.8, the molten pool 13P is solidified before zinc vapor 14v is discharged to the outside of the molten pool 13P, and porosity defects pd are more likely to occur in the weld bead 13. Therefore, y/tL is 2.8 or less. y/tL is preferably 2.6 or less, 2.4 or less, or 2.0 or less.

The lower limit value of y is not particularly limited. From the viewpoint of promoting discharge of zinc vapor 14v from the molten pool 13P and reducing porosity defects pd in the weld bead 13, y is preferably as small as possible. However, as y decreases, the moving speed v of the torch A decreases, and the welding efficiency decreases. Further, as y is smaller, the swing frequency f of the torch A becomes larger, and arc welding may become unstable. **In** addition, when the undulation wavelength y of the torch A is increased and undulation is formed on the weld bead 13, the fatigue strength improving effect to be described later can be obtained. From the viewpoint of securing welding efficiency and welding stability, y/tL may be 0.7 or more.

During the weaving arc welding, the undulation wavelength y of the torch A often coincides with the wavelength of the undulation formed on the weld toe 1311 of the stationary portion 131 of the weld bead 13. However, it may be difficult to specify the undulation wavelength of the weld toe 1311 of the stationary portion 131 of the weld bead 13. **In** this case, it is difficult to specify the undulation wavelength y of the torch A based on the analysis of the weld bead 13. In particular, when the undulation wavelength y of the torch A is short and the weld toe 1311 of the stationary portion 131 of the weld bead 13 does not have a wavy shape, a direct trace of the undulation of the torch A does not remain in the weld bead 13.

As expressed by the formula 2, the upper and lower limit values of the width w of the weld bead 13 are determined according to the sheet thickness tL of the second steel sheet 12. When w/tL is too small, the molten pool 13P is not sufficiently stirred. On the other hand, when w/tL is too large, the molten pool 13P is solidified before the molten pool 13P is stirred. In either case, zinc vapor 14v cannot be sufficiently discharged from the molten pool 13P. Therefore, w/tL is 3.3 or more and 7.0 or less. Alternatively, w/tL may be 3.5 or more, 4.0 or more, or 4.5 or more. Alternatively, w/tL may be 6.5 or less, 6.0 or less, or 5.5 or less.

There is a good correlation between the width w (mm) of the weld bead 13 and the swing amplitude x (mm) of the torch A. As illustrated in FIG. 1, in the weaving arc welding in which the torch A for arc welding is periodically moved in the lateral direction to the welding direction WD, the swing amplitude x of the torch A is a half value of the width of the moving range of the torch A during one cycle. The "width" is a width measured along the direction perpendicular to the welding direction WD. In addition to the swing amplitude x of the torch A, the width w of the weld bead 13 is also affected by the current value, the voltage value, the welding speed (that is, the moving speed v of the torch A along the welding direction WD), and the component of the molten pool 13P. By appropriately controlling these items, the weld bead 13 having a width close to a target value can be manufactured.

(2. Droplet transfer frequency)

In the arc welding, it is further necessary that the droplet transfer frequency D (turns/second) from the torch A to the molten pool 13P and the swing frequency f are values satisfying $D/f \geq 25$. The droplet d dropping onto the molten pool 13P has an effect of stirring the molten pool 13P to further promote discharge of zinc vapor 14v from the molten pool 13P. However, when D/f is less than 25, this effect cannot be sufficiently obtained. Therefore, D/f is 25 or more. Alternatively, D/f may be 27 or more, 30 or more, or 35 or more. The upper limit value of D/f is not particularly limited, but may be, for example, 55 or less, 50 or less, or 48 or less.

The droplet transfer frequency D can be controlled by performing arc welding as pulse arc welding. The pulse arc welding is an arc welding performed by periodically increasing and decreasing current and making a pulse-shaped current waveform. There is a correlation between the pulse frequency and the droplet transfer frequency D. In general, as the pulse frequency increases, the droplet transfer frequency D also increases. The droplet transfer frequency D is also slightly affected by the feeding speed of the welding wire AW, the shielding gas composition, and the current value. By measuring the droplet transfer frequency D while appropriately changing these welding conditions, it is possible to specify welding conditions to obtain a desired droplet transfer frequency D.

The droplet transfer frequency D can be measured by observing the molten pool 13P using a high-speed camera. However, after the molten pool 13P is solidified, no direct trace of the droplet transfer frequency D remains in the weld bead 13. Therefore, the droplet transfer frequency D needs to be measured during arc welding. However, it is not necessary to always measure the droplet transfer frequency D during arc welding. When the welding conditions affecting the above-described droplet transfer frequency D are constant, the droplet transfer frequency D is also substantially constant. Therefore, in the weaving arc welding performed under the conditions where it is confirmed in advance that a predetermined droplet transfer frequency D is achieved, the droplet transfer frequency D is regarded as the predetermined value.

(Si content in weld bead 13)

In the manufacturing method for the arc-welded joint 1 according to the embodiment, the Si content is preferably 0.5 mass% or less in the weld bead 13. The present inventors have found that, when the Si content in the molten pool 13P is reduced, it is possible to further reduce porosity defects pd included in the weld bead 13, which is formed by solidifying the molten pool 13P. The reason for this is not clear at present, but it is presumed that when the Si content in the molten pool 13P decreases, the viscosity of the molten pool 13P decreases, and discharge of zinc vapor 14v from the molten pool 13P is further promoted. This effect is remarkably exhibited when the Si content is 0.5 mass% or less in the weld bead 13 obtained after arc welding. The Si content in the weld bead 13 may be 0.4 mass% or less, 0.3 mass% or less, or 0.2 mass% or less.

The Si content in the weld bead 13 can be specified by cutting the vicinity of the vertex of the weld bead 13 and measuring the component of the swarf by a known analysis method such as ICP. The Si content in the weld bead 13 is affected by the Si content in the first steel sheet 11 and the second steel sheet 12, the Si content in the wire, the mixing ratio of the base metal component and the wire component, and the like. Therefore, the Si content in the weld bead 13 can be controlled by selecting a wire component and a mixing ratio of the base metal component and the wire component that are suitable for the component of the welded steel sheet.

(Preferred lower limit value of undulation wavelength y of torch)

When the undulation wavelength y of the torch A is large during the weaving arc welding, the weld toe 1311 of the stationary portion 131 of the weld bead 13 has a wavy shape reflecting the weaving of the torch A. The weld toe 1311 is a line where the surface of the base metal intersects the surface of the weld bead 13. On the other hand, when the undulation wavelength y of the torch A is small, the weld toe 1311 does not have a wavy shape. In normal weaving arc welding, from the viewpoint of adjusting the shape of the weld bead 13 to obtain an improved aesthetic appearance, the weld toe 1311 is often provided no wavy shape by reducing the wavelength y. However, the present inventors have found that the fatigue strength of the arc-welded joint 1 is improved when the weld toe 1311 on the second steel sheet 12 side has a wavy shape. The present inventors estimate that this is because stress applied to the weld bead 13 is preferably dispersed when the weld toe 1311 has a wavy shape.

(Prevention of bleed-through)

As the heat input amount of arc welding increases, the molten pool 13P becomes deeper. As a result, the molten pool 13P may penetrate the second steel sheet 12 so that the weld bead 13 is exposed to the back side of the second steel sheet 12. This phenomenon is generally called "bleed-through". When bleed-through occurs, the molten metal constituting the molten pool 13P drips down, so that welding workability is impaired. Further, when the second steel sheet 12 has a zinc-type coating 14 on both surfaces thereof, the zinc-type coating 14 on the back side of the second steel sheet 12 is mixed into the molten pool 13P due to bleed-through. As a result, the amount of zinc vapor 14v increases, and porosity defects pd increase.

Therefore, in the manufacturing method for the arc-welded joint 1 according to the embodiment, preferably, the weld bead 13 does not penetrate the second steel sheet 12 in the sheet thickness direction. That is, in the manufacturing method for the arc-welded joint 1 according to the embodiment, preferably, the surface of the second steel sheet 12 opposite to the surface to be arc-welded 121 is not melted in arc welding. In other words, in arc welding, the rear surface of the second steel sheet 12 preferably remains solid. As a result, the amount of porosity defects pd can be further reduced.

When the heat input amount of arc welding is reduced and the penetration depth of the weld bead 13 is decreased, bleed-through can be prevented.

(Securing penetration depth)

On the other hand, from the viewpoint of stably securing the joining strength of the arc-welded joint 1, it is preferable to increase the penetration depth of the weld bead 13. For example, in the manufacturing method for the arc-welded joint 1 of the embodiment, in a cross section along the sheet thickness direction, it is preferable that the outer edge of the weld bead 13 intersects the mating surface of the first steel sheet and the second steel sheet. That is, in the manufacturing method for the arc-welded joint 1 of the embodiment, as illustrated in FIG. 2, a root R may be melted in arc welding to grow the weld bead up to the mating surface of the first steel sheet and the second steel sheet.

The root R is the bottom portion where welding is performed. Specifically, the root R is a portion where the end surface of the first steel sheet 11 and the surface to be arc-welded 121 of the second steel sheet 12 intersect each other. The outer edge of the weld bead 13 is the surface of the weld bead 13 and the weld interface (the interface between the weld bead 13 and the base metal). The weld interface can be easily visually recognized by etching a cross section of the arc-welded joint 1.

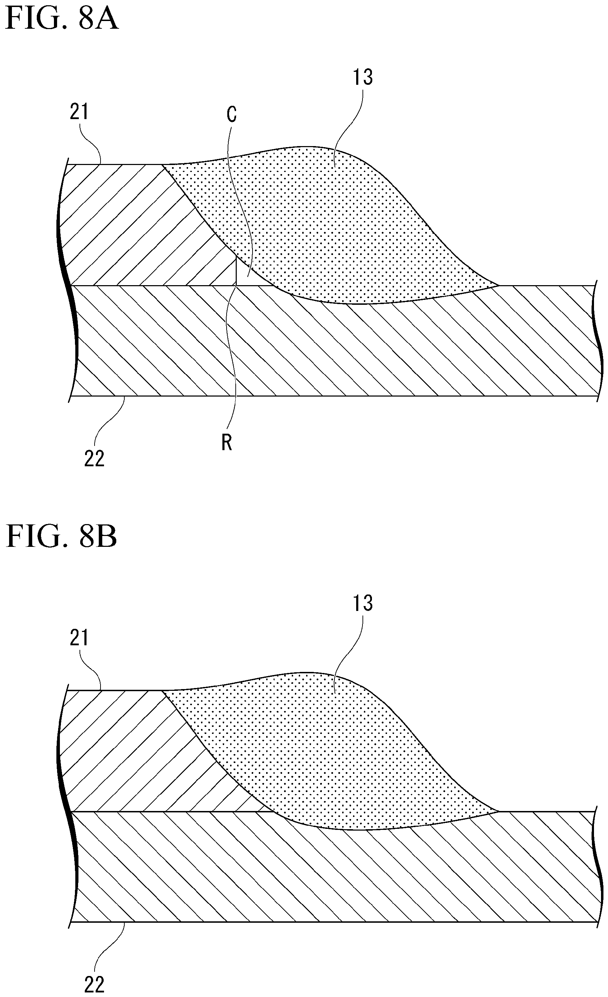

When the penetration depth is small and the molten pool 13P does not reach the root R, a gap C is formed in the vicinity of the root R, that is, at the joint corner portion, as illustrated in FIG. 8A. On the other hand, when the molten pool 13P is formed to extend to the root R, the penetration depth of the weld bead 13 is increased, the joint corner portion is made solid as illustrated in FIG. 8B, and the joining strength of the arc-welded joint 1 can be stably secured.

(Swing frequency f)

In the manufacturing method for the arc-welded joint 1 of the embodiment, the swing frequency f of the weaving arc welding is preferably less than 10 Hz. When the swing frequency f is less than 10 Hz, the stability of arc welding can be further enhanced. The swing frequency f may be 9 Hz or less, 8 Hz or less, or 7 Hz or less.

(Type of arc welding)

The arc welding is preferably Metal Active Gas (MAG) welding. Among arc welding processes, Tungsten Inert Gas (TIG) welding disclosed in Patent Document 1 and plasma arc welding are non-consumable electrode welding processes, and therefore cannot achieve stirring of a molten pool by combining weaving and droplet transfer. Metal Inert Gas (MIG) welding differs from Metal Active Gas (MAG) welding in that an inert gas mainly composed of argon or helium is used as a shielding gas, but the gas is expensive. In addition, since the arc tends to spread, sufficient penetration is not obtained in some cases. On the other hand, Metal Active Gas (MAG) welding does not have these disadvantages.

Next, the arc-welded joint 1 according to another embodiment of the present disclosure will be described. In the embodiment, the arc-welded joint 1 includes: a first steel sheet portion 21; a second steel sheet portion 22 stacked with the first steel sheet portion 21 in a sheet thickness direction; and a weld bead 13 to join an end portion of the first steel sheet portion 21 disposed on a surface 121 of the second steel sheet portion 22 with the surface 121 of the second steel sheet portion 22; wherein the surface 121 of the second steel sheet portion 22 has a zinc-type coating 14 in a region where the weld bead 13 is not provided, a width w of the weld bead 13 and a sheet thickness tL of the second steel sheet portion 22 satisfy $3.3 \leq w/tL \leq 7.0$, and a porosity defect rate in a stationary portion 131 of the weld bead 13 is less than 10%. That is, the arc-welded joint of the embodiment includes: a first steel sheet; a second steel sheet stacked with the first steel sheet; and a weld bead that linearly extends along the end portion of the first steel sheet and joins the end portion of the first steel sheet with the surface of the second steel sheet, wherein the second steel sheet has a zinc-type coating on the surface provided with the weld bead, a width w of the weld bead and a sheet thickness tL of the second steel sheet satisfy $3.3 \leq w/tL \leq 7.0$, and a porosity defect rate in a stationary portion of the weld bead is less than 10%. Hereinafter, each component of the arc-welded joint 1 of the embodiment will be described in detail.

The arc-welded joint 1 of the embodiment includes a first steel sheet portion 21 and a second steel sheet portion 22 stacked with the first steel sheet portion 21. The first steel sheet portion 21 is the first steel sheet 11 after welding. The second steel sheet portion 22 is the second steel sheet 12 after welding. In order to distinguish an object before welding from an object after welding, in the embodiment, a steel sheet as a component of a weld joint is referred to as "steel sheet portion", and a steel sheet as a raw material of a weld joint is referred to as "steel sheet".

Similarly to the above-described "steel sheet", the "steel member" is also a concept including not only a sheet-shaped member but also a sheet-shaped portion of a member having a three-dimensional shape. For example, the flange portion of a hat-shaped member is also regarded as a steel member according to the embodiment. Other suitable embodiments of the first steel sheet 11 and the second steel sheet 12 described above can also be applied to the first steel sheet portion 21 and the second steel sheet portion 22.

Further, the arc-welded joint 1 of the embodiment includes a weld bead 13 to join the end portion of the first steel sheet portion 21 disposed on the surface 121 of the second steel sheet portion 22 with the surface 121 of the second steel sheet portion 22. The weld bead joins the end portion of the first steel sheet portion 21 and the surface 121 of the second steel sheet portion 22 along the end portion of the first steel sheet portion 21. Therefore, the arc-welded joint 1 of the embodiment is a so-called lap fillet weld joint.

The surface 121 of the second steel sheet portion 22 has a zinc-type coating 14. That is, of the first steel sheet portion 21 and the second steel sheet portion 22, at least the surface 121 of the second steel sheet portion 22 on which the weld bead 13 is disposed has a zinc-type coating 14 on part or the whole thereof. This improves corrosion resistance of the arc-welded joint 1. However, the zinc-type coating 14 is not present in the region where the weld bead 13 is provided. That is, the zinc-type coating 14 is present in a region where the weld bead 13 is not provided on the surface of the second steel sheet portion 22. More preferably, both surfaces of the second steel sheet portion 22 have a zinc-type coating 14. Even more preferably, one surface or both surfaces of the first steel sheet portion 21 also have a zinc-type coating 14.

(Width w and porosity defect rate of weld bead)

In the arc-welded joint 1 of the embodiment, the width w of the weld bead 13 and the sheet thickness tL of the second steel sheet portion 22 satisfy $3.3 \leq w/tL \leq 7.0$, and the porosity defect rate in the stationary portion 131 of the weld bead 13 is less than 10%. For example, as the manufacturing method for the arc-welded joint 1 of the above-described embodiment, such a weld bead 13 can be manufactured by an arc welding including:

(1) performing weaving arc welding under a predetermined conditions, and
(2) controlling the droplet transfer frequency D from the torch A for arc welding to the molten pool 13P within a predetermined range. When the porosity defect rate is less than 10%, the joining strength of the arc-welded joint 1 can be improved, and further, electrodeposition coating defects can be suppressed.

The stationary portion 131 of the weld bead 13 is the region other than a start point portion 132 and an end point portion 133 in the weld bead 13. As illustrated in the image of FIG. 5, the start point portion 132 and the end point portion 133 of the weld bead 13 are formed in a state where the weld arc is not stable, and thus have non-uniform widths and shapes. In the arc-welded joint 1 of the embodiment, the region within 15 mm from the start point of the weld bead 13 is defined as the start point portion 132, the region within 15 mm from the end point is defined as the end point portion 133, and the other region is defined as the stationary portion 131.

The porosity defect rate in the stationary portion 131 of the weld bead 13 is measured by the following procedure. First, an X-ray transmission image of the stationary portion 131 of the weld bead 13 is photographed. As a result, porosity defects pd included in the weld bead 13 can be confirmed. Next, the total value of the lengths of the porosity defects pd along the weld bead 13 is measured. Then, the porosity defect rate can be calculated by dividing the total value of the lengths of the porosity defects pd by the length of the stationary portion 131.

In order to exemplify the measurement method for the porosity defect rate, FIG. 5 illustrates an X-ray transmission image of the weld bead 13 having a porosity defect rate of 0% in the stationary portion 131, and FIG. 6 illustrates an X-ray transmission image of the weld bead 13 having a porosity defect rate of 52.0% in the stationary portion 131. Since no porosity defects pd are observed in the image of FIG. 5, the total value of the lengths of porosity defects pd along the weld bead 13 is regarded as 0 mm. In the image of FIG. 6, a large number of porosity defects pd are recognized in the weld bead 13. These porosity defects pd projected on a line along the weld bead 13 are shown above the weld bead 13 in FIG. 6. The total value of the projection lines is the total value of the lengths of porosity defects pd along the weld bead 13.

(Si content in weld bead 13)

In the arc-welded joint 1 according to the embodiment, the Si content is preferably 0.5 mass% or less in the weld bead 13. This further reduces porosity defects pd. The Si content in the weld bead 13 may be 0.4 mass% or less, 0.3 mass% or less, or 0.2 mass% or less. The Si content in the weld bead 13 can be measured by the method described above.

(Shape of weld toe 1311 on second steel sheet portion 22 side in stationary portion 131 of weld bead 13)

As illustrated in FIG. 7, in the stationary portion 131 of the weld bead 13, the weld toe 1311 on the second steel sheet portion 22 side may have a wavy shape. Here, the wavy shape refers to a shape in which concave portions and convex portions alternately and periodically appear. The wavelength Y of the weld toe 1311 and the sheet thickness tL of the second steel sheet portion 22 may satisfy $0.7 \leq Y/tL \leq 2.8$.

In normal weaving arc welding, from the viewpoint of adjusting the shape of the weld bead 13 to obtain an improved aesthetic appearance, the weld toe 1311 is often provided no wavy shape by reducing the undulation wavelength y of the torch. Also, in the arc-welded joint 1 according to the embodiment, it is not necessary to provide a wavy shape on the weld toe 1311 from the viewpoint of suppressing porosity defects. However, the present inventors have found that the fatigue strength of the arc-welded joint 1 is improved when the weld toe 1311 on the second steel sheet portion 22 side has a wavy shape. The present inventors estimate that this is because stress applied to the weld bead 13 is preferably dispersed when the weld toe 1311 has a wavy shape.

However, as the wavelength Y of the weld toe is smaller, the wavy shape of the weld toe is less likely to be visually recognized, and the effect of improving the fatigue strength is less likely to be obtained. From the viewpoint of securing the effect of improving the fatigue strength, $0.7 \leq Y/t$ is preferable. On the other hand, in the case of $Y/tL \leq 2.8$, the occurrence of porosity defects pd in the weld bead 13 can be effectively suppressed. Therefore, the wavelength Y of the weld toe 1311 of the stationary portion 131 of the weld bead 13 on the second steel sheet portion 22 side and the sheet thickness tL of the second steel sheet portion 22 may satisfy $Y/tL \leq 2.8$.

However, as described above, from the viewpoint of reducing porosity defects, the weld toe 1311 may have a smooth shape such that the wavy shape cannot be confirmed by reducing the wavelength y in the weaving arc welding. Even when no wavy shape is observed on the weld toe 1311 of the weld bead 13, if the ratio of the width of the weld bead 13 in the stationary portion to the penetration depth of the weld bead 13 measured in a cross section perpendicular to the extending direction of the weld bead 13 (weld bead width ÷ penetration depth) exceeds 10, it is estimated that the weld bead 13 is formed by the weaving arc welding. The penetration depth is the maximum value of the depth of the weld bead 13 that is based on the surface 121 of the second steel sheet portion 22 and measured in a cross section.

(Prevention of bleed-through)

When the heat input amount of arc welding is high, bleed-through may occur. When bleed-through occurs, the molten metal constituting the molten pool 13P drips down, so that welding workability is impaired. Further, when the second steel sheet portion 22 has a zinc-type coating 14 on both surfaces thereof, the zinc-type coating 14 on the back side of the second steel sheet portion 22 is mixed into the molten pool 13P due to bleed-through. As a result, the amount of zinc vapor 14v increases, and porosity defects pd increase. Therefore, in the arc-welded joint 1 according to the embodiment, preferably, the weld bead 13 does not penetrate the second steel sheet portion 22 in the sheet thickness direction. That is, in the arc-welded joint 1 according to the embodiment, preferably, the weld bead 13 is not exposed in the surface of the second steel sheet portion 22 opposite to the surface 121 on which the weld bead 13 is provided. As a result, the amount of porosity defects pd can be further reduced.

(Securing penetration depth)

On the other hand, from the viewpoint of stably securing the joining strength of the arc-welded joint 1, it is preferable to increase the penetration depth of the weld bead 13. For example, as illustrated in FIG. 8B, in the arc-welded joint 1 according to the embodiment, the root R, which is a position where the end surface of the first steel sheet portion 21 and the surface of the second steel sheet portion 22 intersect each other in a cross section along the sheet thickness direction, may be included in the weld bead 13. In other words, in a cross section of the arc-welded joint 1 along the extending direction of the weld bead 13, the outer edge of the weld bead 13 may intersect the mating surface of the first steel sheet portion 21 and the second steel sheet portion 22. The weld bead 13 is grown beyond the root R such that the mating surface of the first steel sheet portion 21 and the second steel sheet portion 22 intersect the outer edge of the weld bead 13, whereby the penetration depth of the weld bead 13 can be increased to stably secure the joining strength of the arc-welded joint 1.

(Other preferred embodiments)

In the manufacturing method for the arc-welded joint 1 and the arc-welded joint 1 according to the embodiment, various embodiments other than those described above can be appropriately adopted. Hereinafter, more preferred embodiments will be exemplified. Unless otherwise specified, embodiments exemplified below are applicable to both the manufacturing method for the arc-welded joint 1 and the arc-welded joint 1 according to the embodiment. Preferred embodiments of the first steel sheet 11 and the second steel sheet 12, which are raw materials of the arc-welded joint, are also applicable to the first steel sheet portion 21 and the second steel sheet portion 22, which are components of the arc-welded j oint, respectively.

The thickness of the first steel sheet 11 is not particularly limited. For example, when the first steel sheet 11 is a steel sheet for a vehicle, the sheet thickness of the first steel sheet 11 is preferably 0.8 mm or more and 4.0 mm or less. Similarly, the sheet thickness tL of the second steel sheet 12 is also not particularly limited, and when the second steel sheet 12 is a steel sheet for a vehicle, the sheet thickness is preferably 0.8 mm or more and 4.0 mm or less.

The tensile strength of the first steel sheet 11 is not particularly limited. For example, the tensile strength of the first steel sheet 11 may be 440 MPa or more and 1500 MPa or less. Similarly, the tensile strength of the second steel sheet 12 is not particularly limited. For example, the tensile strength of the second steel sheet 12 may be 440 MPa or more and 1500 MPa or less. The chemical composition and the metallographic structure of these steel sheets are also not particularly limited, and known preferable configurations can be appropriately adopted.

The thickness, components, and the like of the zinc-type coating 14 are not particularly limited. The adhesion amount of the zinc-type coating 14 may be, for example, $5 g/m^2$ or more and $200 g/m^2$ or less. Here, the adhesion amount of the zinc-type coating 14 means the total amount of zinc and other elements contained in the zinc-type coating 14. Examples of the elements other than zinc contained in the zinc-type coating 14 include Si, Al, Mg, and Fe.

Only the adhesion amount of zinc contained in the zinc-type coating 14 may be separately defined. For example, the zinc content per one surface of the zinc-type coating 14 may be $20 g/m^2$ or more. The zinc content per one surface of the zinc-type coating 14 does not include the amount of alloy elements other than zinc, such as Si, Al, Mg, and Fe. The adhesion amount per one surface means the adhesion amount of only the zinc-type coating 14 disposed on the surface on the first steel sheet 11 side among the two surfaces of the second steel sheet 12.

In the arc-welded joint 1 according to the embodiment, the zinc-type coating 14 may be present within 100 $\mu$m adjacent to the weld bead 13. That is, the interval between the zinc-type coating 14 and the weld bead 13 is preferably 100 $\mu$m or less. As a result, corrosion resistance in the vicinity of the weld bead 13 is further improved. The distance between the zinc-type coating 14 and the weld bead 13 is preferably as small as possible and may be 0 $\mu$m. That is, the zinc-type coating 14 and the weld bead 13 may be in contact with each other.

In the manufacturing method for the arc-welded joint 1 according to the embodiment, it is not necessary to remove the zinc-type coating from the surface 121 of the second steel sheet 12 before arc welding. During arc welding, the zinc-type coating 14 may evaporate in the vicinity of the weld bead 13, thereby generating a gap between the weld bead 13 and the zinc-type coating 14. However, when arc welding is performed without removing the zinc-type coating 14 from the surface 121 of the second steel sheet 12, the distance between the zinc-type coating 14 and the weld bead 13 can be easily set to 100 $\mu$m or less. When the zinc-type coating 14 is removed from the surface 121 of the second steel sheet 12 before arc welding, the distance between the weld bead 13 and the zinc-type coating 14 exceeds 100 $\mu$m at part or the whole of the weld toe of the weld bead 13.

The zinc-type coating 14 is disposed on at least the surface to be arc-welded 121 of the second steel sheet 12. Therefore, coating different from the zinc-type coating 14 may be provided on the surface of the first steel sheet 11 and the surface of the second steel sheet 12 on the side not subjected to arc welding. Examples of the coating different from the zinc-type coating 14 include aluminum coating.

The arc-welded joint 1 may have a coating film for the purpose of improving corrosion resistance or the like. The coating film is, for example, an electrodeposition coating film. The manufacturing method for the arc-welded joint 1 may include a coating step such as an electrodeposition coating step.

The above-described configuration of the manufacturing method for the arc-welded joint 1 according to the embodiment is applied to at least a part of the targeted welds in the arc-welded joint 1. The above-described configuration of the arc-welded joint 1 is applied to at least a part of the welds in the arc-welded joint 1. Preferably, the configuration described above is applied throughout the welds in the first steel sheet 11 and the second steel sheet 12. However, for example, in order to improve the welding efficiency, the above-described configuration may be applied only to a portion where suppression of porosity defects pd is strongly required, and the configuration of the normal arc-welded joint 1 may be applied to other portions.

During the weaving arc welding, the shape of the trajectory of the torch A is not particularly limited as long as the above-described requirements are satisfied. The trajectory of the torch A can be, for example, a sine wave shape. For example, when the moving speed v of the torch A is constant along the welding direction WD, and the torch A shows simple harmonic motion along the direction perpendicular to the welding direction WD, the trajectory of the torch A can be formed into a sine wave shape. On the other hand, when the moving speed v of the torch A is periodically changed along the welding direction WD, the shape of the trajectory of the torch A can be variously changed.

The application of the arc-welded joint 1 according to the embodiment is not limited. As a suitable application of the arc-welded joint 1 of the embodiment, examples thereof include building materials and vehicle components.

The vehicle component according to another embodiment of the present disclosure includes the arc-welded joint 1 according to the above-described embodiment. Therefore, the vehicle component according to the embodiment, made of zinc-coated steel sheets, is excellent in corrosion resistance. In addition, the vehicle component according to the embodiment is excellent in joint strength and electrodeposition coating properties because porosity defects are suppressed.

Examples

The effect of an embodiment of the present disclosure will be described more specifically with reference to Examples. However, the conditions in Examples are merely one condition example adopted to confirm the enablement and effects of the present disclosure. The present disclosure is not limited to this one condition example. The present disclosure can adopt various conditions as long as the object of the present disclosure is achieved without departing from the gist of the present disclosure.

Arc-welded joints were produced under various welding conditions. These arc-welded joints were obtained by arc-welding the end portion of the first steel sheet and the surface of the second steel sheet, which were overlapped with each other, to form a weld bead.

The sheet thickness tL of the second steel sheet, the width w of the weld bead, the undulation wavelength y of the torch, the swing amplitude x of the torch, the moving speed v of the torch along the welding direction, and the swing frequency f of the torch are shown in Table 1A or 1B. In addition, the value D/f obtained by dividing the droplet transfer frequency D by the swing frequency f of the torch is also shown in Table 1B. In some examples, the weld bead was produced by normal arc welding instead of weaving arc welding. In the examples in which weaving arc welding was not performed, D/f was described as "-". In the weaving arc welding apparatus used by the inventors, there was a slight deviation between the set value and the actual value in the swing amplitude x of the torch. In Table 1A, both the set value and the actual value of the swing amplitude x in the apparatus are described.

The wavelength Y of the weld toe on the side of the second steel sheet in the stationary portion of the weld bead and the Si content in the weld bead obtained by arc welding are shown in Table 2. For reference, arithmetic values of y/tL and w/tL are also shown in Table 2. For some examples, the value obtained by dividing the width of the weld bead by the penetration depth of the weld bead is also shown in Table 2. In some examples, the weld toe of the stationary portion of the weld bead on the second steel sheet side did not have a wavy shape. In such an example, Y and Y/tL are expressed as "-".

Further, the porosity defect rate in the stationary portion of the weld bead was measured by performing X-ray radiography to the weld bead of the arc-welded joint. The porosity defect rate is also shown in Table 2.

[Table 1A]

| No | Sheet thickness tL of second steel sheet | Width w of weld bead | Moving speed v of torch along welding direction | Swing frequency f of torch | Swing amplitude x of torch (set value) | Swing amplitude x of torch (actual value) |
|---|---|---|---|---|---|---|
| | mm | mm | m/min | Hz | mm | mm |
| 1 | 1.6 | 8.2 | 0.8 | 3.3 | 3.0 | 1.2 |
| 2 | 1.6 | 8.4 | 0.8 | 3.3 | 3.0 | 1.2 |
| 3 | 2.9 | 10.0 | 0.6 | 3.0 | 2.5 | 1.4 |
| 4 | 2.9 | 9.3 | 0.8 | 2.0 | 2.5 | 1.7 |
| 5 | 1.6 | 10.8 | 0.6 | 2.5 | 3.0 | 2.0 |
| 6 | 1.6 | 6.3 | 0.8 | Non WV | Non WV | Non WV |
| 7 | 1.6 | 7.3 | 0.8 | Non WV | Non WV | Non WV |
| 8 | 1.6 | 8.5 | 0.8 | 3.3 | 3.0 | 1.2 |
| 9 | 1.6 | 8.4 | 0.3 | 4.5 | 1.5 | 0.5 |
| 10 | 1.6 | 8.7 | 0.8 | 4.0 | 2.5 | 0.9 |
| 11 | 1.6 | 9.5 | 0.8 | 4.0 | 2.0 | 0.7 |
| 12 | 2.9 | 8.9 | 0.8 | Non WV | Non WV | Non WV |
| 13 | 2.3 | 10.1 | 1.0 | 2.5 | 3.0 | 2.1 |

[Table 1B]

| No | Undulation wavelength y of torch | y/tL | w/tL | D/f |
|---|---|---|---|---|
| | mm | - | - | - |
| 1 | 4.0 | 2.53 | 5.10 | 36.4 |
| 2 | 4.0 | 2.53 | 5.25 | 36.7 |
| 3 | 3.3 | 1.15 | 3.45 | 29.0 |
| 4 | 6.7 | 2.30 | 3.22 | 42.5 |

(continued)

| No | Undulation wavelength y of torch | y/tL | w/tL | D/f |
|----|----------------------------------|------|------|-----|
|    | mm | - | - | - |
| 5 | 4.0 | 2.50 | 6.77 | 46.0 |
| 6 | Non WV | Non WV | 3.94 | - |
| 7 | Non WV | Non WV | 4.59 | - |
| 8 | 4.0 | 2.53 | 5.32 | 35.2 |
| 9 | 1.1 | 0.69 | 5.25 | 25.3 |
| 10 | 3.3 | 2.08 | 5.44 | 18.5 |
| 11 | 3.3 | 2.08 | 5.94 | 34.5 |
| 12 | Non WV | Non WV | 3.07 | - |
| 13 | 6.7 | 2.90 | 4.39 | 41.5 |

[Table 2]

| No | Wavelength Y of weld toe | Si content of Weld bead | Y/tL | Bead width w / Penetration depth | Porosity defect rate | Evaluation |
|----|--------------------------|-------------------------|------|----------------------------------|----------------------|------------|
|    | mm | Mass% | - | - | % |  |
| 1 | 4.1 | 0.28 | 2.55 |  | 2.4 | Example |
| 2 | 4.2 | 0.28 | 2.63 |  | 0.5 | Example |
| 3 | 3.8 | 0.29 | 1.31 |  | 1.3 | Example |
| 4 | 6.4 | 0.29 | 2.22 |  | 14.6 | Comparative Example |
| 5 | 4.2 | 0.28 | 2.64 |  | 0.9 | Example |
| 6 | - | 0.28 | - | 7.6 | 10.6 | Comparative Example |
| 7 | - | 0.28 | - | 9.6 | 24.1 | Comparative Example |
| 8 | 3.9 | 0.53 | 2.44 |  | 9.3 | Example |
| 9 | - | 0.28 | - | 12.2 | 0.7 | Example |
| 10 | 3.2 | 0.28 | 2.00 |  | 23.9 | Comparative Example |
| 11 | 3.3 | 0.46 | 2.06 |  | 7.7 | Example |
| 12 | - | 0.62 | - | 6.6 | 29.2 | Comparative Example |
| 13 | 6.7 | 0.78 | 2.91 |  | 33.6 | Comparative Example |

In Comparative Example 4, the width w of the weld bead and the sheet thickness tL of the second steel sheet did not satisfy the relationship of $3.3 \leq w/tL \leq 7.0$. Therefore, in Comparative Example 4, the porosity defect rate was not suppressed.

In Comparative Examples 6 and 7, weaving welding was not performed, and the droplet transfer frequency D from the torch to the molten pool and the swing frequency f did not satisfy the relationship of $D/f \geq 25$. Therefore, in Comparative Examples 6 and 7, the porosity defect rate was not suppressed.

In Comparative Example 10, the droplet transfer frequency D from the torch to the molten pool and the swing frequency f did not satisfy the relationship of $D/f \geq 25$. Therefore, in Comparative Examples 6 and 7, the porosity defect rate was not suppressed.

In Comparative Example 12, weaving welding was not performed, and the width w of the weld bead and the sheet thickness tL of the second steel sheet did not satisfy the relationship of $3.3 \leq w/tL \leq 7.0$. Therefore, in Comparative Example 12, the porosity defect rate was not suppressed.

In Comparative Example 13, the undulation wavelength y of the torch and the sheet thickness tL of the second steel sheet did not satisfy the relationship of $y/tL \leq 2.8$. Therefore, in Comparative Example 13, the porosity defect rate was not suppressed.

On the other hand, in all the examples, in which the welding conditions were appropriate, the porosity defect rate was suppressed to less than 10%. In Example 9, since the undulation wavelength y of the torch was small, the shape of the weld toe of the weld bead did not have a wavy shape. Therefore, in Table 1B, the wavelength Y of the weld toe of Example 9 is described as "-". However, also in Example 9, the effect of suppressing porosity defects was sufficiently obtained. In the other examples, the undulation wavelength y of the torch and the wavelength Y of the weld toe almost coincided with each other.

In Examples in which the Si content in the weld bead was 0.5 mass% or less, porosity defects were further suppressed. In Example 8, in which the Si content in the weld bead was more than 0.5 mass%, the porosity defect rate was 9.3%. On the other hand, in each Examples 1, 2, 3, 5, 9, and 11, in which the Si content in the weld bead was 0.5 mass% or less, the porosity defect rate was lower than that in Example 8.

Reference Signs List

| | |
|---|---|
| 1 | Arc-welded joint |
| 11 | First steel sheet |
| 111 | End portion |
| 12 | Second steel sheet |
| 121 | Surface to be arc-welded |
| 13 | Weld bead |
| 131 | Stationary portion |
| 1311 | Weld toe |
| 132 | Start point portion |
| 133 | End point portion |
| 13P | Molten pool |
| 14 | Zinc-type coating |
| 14v | Zinc vapor |
| 21 | First steel sheet portion |
| 22 | Second steel sheet portion |
| A | Torch |
| AW | Welding wire |
| d | Droplet |
| D | Droplet transfer frequency |
| pd | Porosity defects |
| R | Root |
| C | Gap |
| tL | Sheet thickness of second steel sheet |
| WD | Welding direction |
| w | Width of weld bead |
| x | Swing amplitude of torch |
| y | Undulation wavelength of torch |

**Claims**

1. A manufacturing method for an arc-welded joint, the method comprising:

    stacking a first steel sheet and a second steel sheet in a sheet thickness direction so that an end portion of the first steel sheet is disposed on a surface of the second steel sheet; and
    performing arc welding to the end portion of the first steel sheet and the surface of the second steel sheet, which are overlapped with each other, to form a weld bead,
    wherein the surface of the second steel sheet has a zinc-type coating,
    the arc welding is weaving arc welding in which a torch is periodically swung in a direction transverse to a welding direction,
    a sheet thickness $t_L$ (mm) of the second steel sheet and an undulation wavelength y (mm) of the torch in the weaving arc welding are values satisfying $y/t_L \leq 2.8$,
    a width w (mm) of the weld bead and the sheet thickness $t_L$ of the second steel sheet are values satisfying $3.3 \leq w/t_L \leq 7.0$, and

in the weaving arc welding, a droplet transfer frequency D (turns/second) from the torch to a molten pool and a swing frequency f (Hz) are values satisfying D/f $\geq$ 25.

2. The manufacturing method for an arc-welded joint according to claim 1, wherein the weld bead has a Si content of 0.5 mass% or less.

3. The manufacturing method for an arc-welded joint according to claim 1 or 2, wherein the undulation wavelength y of the torch and the sheet thickness tL of the second steel sheet are values satisfying $0.7 \leq y/tL$.

4. The manufacturing method for an arc-welded joint according to any one of claims 1 to 3, wherein the weld bead does not penetrate the second steel sheet in the sheet thickness direction.

5. The manufacturing method for an arc-welded joint according to any one of claims 1 to 4, wherein, in a cross section along the sheet thickness direction, an outer edge of the weld bead intersects a mating surface of the first steel sheet and the second steel sheet.

6. The manufacturing method for an arc-welded joint according to any one of claims 1 to 5, wherein the swing frequency f is less than 10 Hz.

7. The manufacturing method for an arc-welded joint according to any one of claims 1 to 6, wherein the arc welding is Metal Active Gas welding.

8. An arc-welded joint comprising:

   a first steel sheet portion;
   a second steel sheet portion stacked with the first steel sheet portion in a sheet thickness direction;
   a weld bead to join an end portion of the first steel sheet portion disposed on a surface of the second steel sheet portion with the surface of the second steel sheet portion;
   wherein the surface of the second steel sheet portion has a zinc-type coating in a region where the weld bead is not provided,
   a width w of the weld bead and a sheet thickness tL of the second steel sheet portion satisfy $3.3 \leq w/tL \leq 7.0$, and
   a porosity defect rate in a stationary portion of the weld bead is less than 10%.

9. The arc-welded joint according to claim 8, wherein the weld bead has a Si content of 0.5 mass% or less.

10. The arc-welded joint according to claim 8 or 9, wherein,

    in the stationary portion of the weld bead, a weld toe on a side of the second steel sheet portion has a wavy shape, and
    a wavelength Y of the weld toe and the sheet thickness tL of the second steel sheet portion satisfy $0.7 \leq Y/tL \leq 2.8$.

11. The arc-welded joint according to any one of claims 8 to 10, wherein the weld bead does not penetrate the second steel sheet portion in the sheet thickness direction.

12. The arc-welded joint according to any one of claims 8 to 11, wherein, in a cross section along the sheet thickness direction, an outer edge of the weld bead intersects a mating surface of the first steel sheet portion and the second steel sheet portion.

13. A vehicle component comprising the arc-welded joint according to any one of claims 8 to 12.

# FIG. 1

# FIG. 2

# FIG. 3

# FIG. 4

# FIG. 5

132    131    133

0. 0%

15mm    15mm

# FIG. 6

132    131    133

3cm

52. 0%

15mm    pd    15mm

# FIG. 7

131

121(14)

1311

## FIG. 8A

## FIG. 8B

## INTERNATIONAL SEARCH REPORT

| | International application No. |
|---|---|
| | **PCT/JP2023/022494** |

**A. CLASSIFICATION OF SUBJECT MATTER**

*B23K 9/095*(2006.01)i; *B23K 9/00*(2006.01)i; *B23K 9/02*(2006.01)i; *B23K 9/12*(2006.01)i
FI: B23K9/095 501F; B23K9/00 501C; B23K9/02 D; B23K9/12 350D

According to International Patent Classification (IPC) or to both national classification and IPC

**B. FIELDS SEARCHED**

Minimum documentation searched (classification system followed by classification symbols)

B23K9/095; B23K9/00; B23K9/02; B23K9/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/079131 A1 (NISSHIN STEEL CO LTD) 03 May 2018 (2018-05-03) | 8 |
| | paragraphs [0002], [0024]-[0074], [0101], fig. 1-5 | |
| Y | | 9, 11-13 |
| A | | 1-7, 10 |
| Y | JP 2012-101232 A (NIPPON STEEL CORP) 31 May 2012 (2012-05-31) | 9, 11--13 |
| | claim 1, fig. 1 | |
| A | JP 2020-528006 A (POSCO) 17 September 2020 (2020-09-17) | 1-13 |
| | claims 1-12, fig. 1-6 | |
| A | JP 61-108478 A (TOYOTA MOTOR CORP) 27 May 1986 (1986-05-27) | 1-13 |
| | claims 1-2, fig. 1-11 | |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 August 2023** | **22 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/022494**

| Patent document cited in search report | | | Publication date (day/month/year) | Patent family member(s) | | | Publication date (day/month/year) |
|---|---|---|---|---|---|---|---|
| WO | 2018/079131 | A1 | 03 May 2018 | US 2020/0056643 A1 paragraphs [0002], [0037]-[0095], [0120], fig. 1-5 EP 3533550 A1 KR 10-2019-0082805 A CN 110087812 A | | | |
| JP | 2012-101232 | A | 31 May 2012 | (Family: none) | | | |
| JP | 2020-528006 | A | 17 September 2020 | US 2021/0341004 A1 claims 1-12, fig. 1-6 WO 2019/245063 A1 EP 3808488 A1 CN 110839341 A | | | |
| JP | 61-108478 | A | 27 May 1986 | (Family: none) | | | |

Form PCT/ISA/210 (patent family annex) (January 2015)

**REFERENCES CITED IN THE DESCRIPTION**

**Patent documents cited in the description**

- JP 2022098078 A

- JP 2003053544 A